# FASCICULE DE BREVET EUROPEEN

(11) **EP 1 471 815 B1**
(45) Date de publication et mention de la délivrance du brevet: **01.06.2005**
(21) Numéro de dépôt: 03730304.7
(22) Date de dépôt: 29.04.2003
(51) Int. Cl.: A47J 31/40

(54) **DISPOSITIF DE PRODUCTION DE BOISSON PAR INFUSION**
VORRICHTUNG ZUR HERSTELLUNG VON INFUSIONSGETRÄNKEN
DEVICE FOR PRODUCTION OF A DRINK BY INFUSION

(30) Priorité: 03.06.2002 FR 0206765
(43) Date de publication de la demande: 03.11.2004
(73) Titulaire: COMPAGNIE MEDITERRANEENNE DES CAFES S.A., 06510 Carros (FR)
(72) Inventeur: BLANC, J., Office Mediterraneen de Brevets, 24 rue Masséna, 06000 Nice (FR); FERRIER,Christian, Office Mediterraneen de Brevets, 24 rue Masséna, 06000 Nice (FR)
(74) Mandataire: Hautier, Jean-Louis
(86) Numéro de dépôt international: PCT/FR2003/050001
(87) Numéro de publication internationale: WO 2003/101265

(56) Documents cités:
- EP-A- 1 219 217
- WO-A-00/44268

## Description

La présente invention concerne un dispositif de production de boisson par infusion d'un produit contenu dans une dosette.

Elle trouvera particulièrement son application dans le domaine de la production de café à partir de mouture de café préemballée dans des dosettes.

De telles dosettes existent par ailleurs déjà et sont généralement constituées sous forme d'un assemblage de deux feuilles de papier filtre réalisant un espace intermédiaire d'emballage de mouture de café.

Divers machines d'extraction de boissons chaudes à partir de mouture sont connues.

Particulièrement, le document WO-A-00/38558 divulgue une chambre d'extraction pour machine automatique pour la préparation de boissons chaudes dans laquelle la chambre d'extraction est prévue pour recevoir des dosettes ou pastilles prédosées en café moulu.

La chambre est conspuée de deux parties, chacune mobile dans un plan horizontale manière à pouvoir s'écarter ou se rapprocher l'une de l'autre.

Par ailleurs, selon ce document, les deux parties sont également mobiles de façon oscillante.

Une machine ainsi équipée donne globalement satisfaction mais nécessite l'entraînement des deux parties constitutives de la chambre.

Il faut donc prévoir une motorisation suffisamment puissante et un système de transmission de puissance relativement complexe nécessitant la synchronisation des mouvement.

On connaît par ailleurs, du document FR-A-2. 745.995 un appareil pour la fabrication de boissons dans lequel la chambre d'infusion est constituée par deux demi logements, l'un porté par une face du corps de l'appareil, l'autre fixé sur une face de la chaudière, ces deux faces étant en regard l'une de l'autre.

La chambre d'infusion est formée lorsque les deux demi logements se jouxtent.

Cet assemblage de la chambre s'effectue par un mouvement de translation de l'un des logements.

L'appareil ainsi présenté nécessite l'association de différents moyens de butée assurant la rétention de la dosette au moment de l'alimentation puis lors de son entrée dans la chambre d'infusion.

Une mobilité des moyens de butées est également nécessaire pour assurer l'éjection des doses usagées.

L'art antérieur divulgué par cette antériorité impose la réalisation distincte de moyens de butée et d'éjection des dosettes. On connaît par le document WO-A-00/44268 un dispositif selon le préambule de la revendication indépendante 1.

La présente invention permet de remédier à ces inconvénients.

Elle présente pour ce faire un dispositif de production de boisson améliorée.

Un premier avantage de l'invention est de permettre la réalisation des phases d'ouverture et de fermeture de la chambre d'infusion ainsi que la réalisation des phases d'introduction et d'éjection de dosettes par l'intermédiaire d'un moins grand nombre de mouvement et, particulièrement, par le mouvement de rotation de translation combinée d'une seule des parties constitutives de la chambre.

Elle a vaincu le préjugé selon lequel la mise en butée de la dosette et la fermeture/ouverture de la chambre nécessitent la mobilité d'une pluralité de pièces : deux demi chambres ou butées additionnelles.

Un autre avantage de l'invention est de ne nécessiter dans un mode préféré de réalisation qu'un seul moyen d'entraînement pour un mouvement de rotation à un mouvement de translation assurant ainsi à coup sûr et à moindre frais la synchronisation.

Suivant une variante préférée, l'invention est telle qu'elle peut être utilisée et actionnée par un utilisateur par le biais d'un levier.

D'autres buts et avantages apparaîtront au cours de la description qui suit d'un mode de réalisation préféré de l'invention qui n'est cependant pas limitatif.

La présente invention concerne un dispositif selon la revendication indépendante 1.

Selon des variantes préférées, le dispositif est tel que :
- il comporte un organe translatif solidaire de la partie mobile dans son mouvement de translation et par rapport auquel elle est mobile en rotation.
- il présente des moyens de guidage en translation de l'organe translatif.
- l'arbre est actionné en rotation par un levier.
- il comporte des moyens de serrage en fermeture des deux parties de la chambre d'infusion .
- il comporte des moyens de guidage de la dosette.
- les moyens de guidage comprennent une glissière avec au moins une rainure apte à recevoir la périphérie d'une dosette.
- les moyens de guidage sont montés translatifs pour suivre le mouvement de rapprochement ou d'éloignement des parties.
- il comporte une chaudière située du côté de la partie fixe en rotation.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue générale en perspective du dispositif de l'invention.
La figure 2 en est une vue de dessus.
Les figures 3 et 4 sont respectivement des vues de côté et en coupe longitudinale du dispositif de l'invention en position d'alimentation en dosettes.
Les figures 5 et 6 sont respectivement des vues de côté et en coupe du dispositif de l'invention dans une position de réception de dosettes dans la chambre d'infusion.
Les figures 7 et 8 sont respectivement des vues de côté et en coupe longitudinale du dispositif de l'invention en position d'extraction.

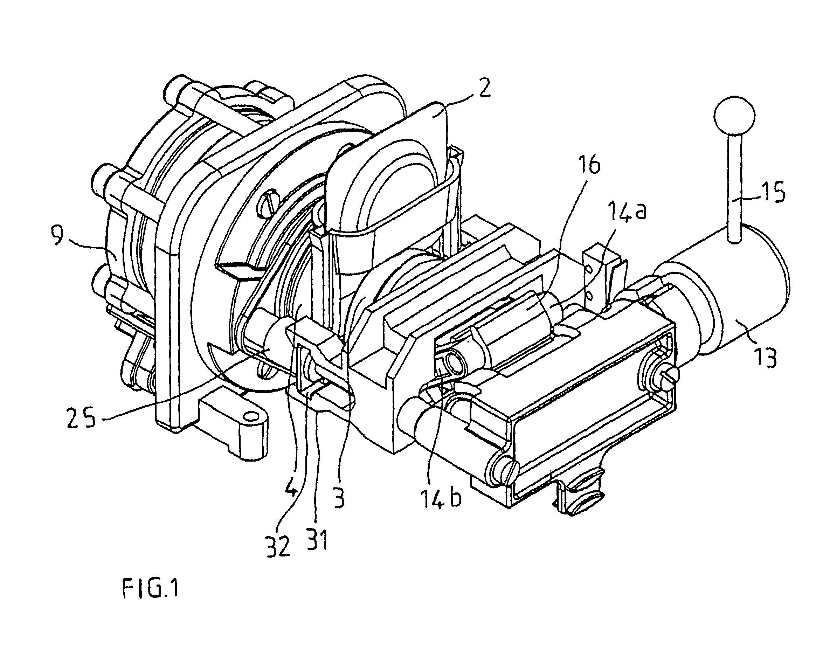

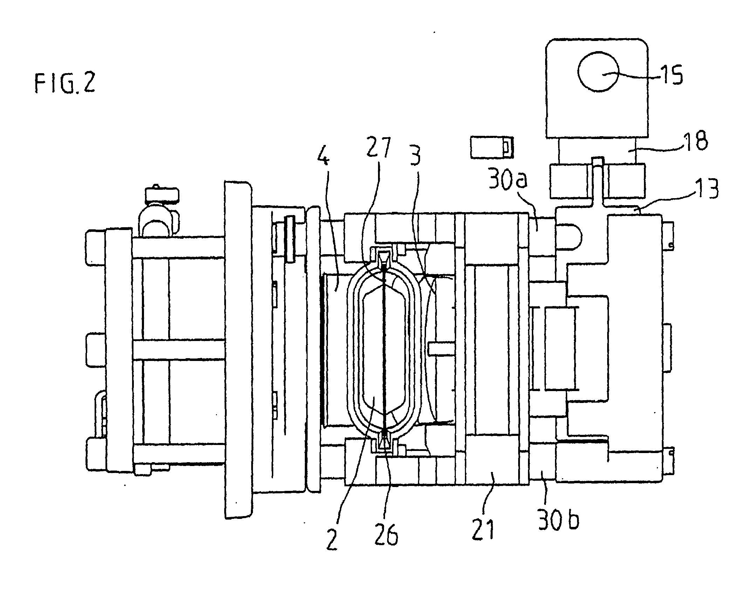

En se référant aux figures et particulièrement aux figures 1 et 2, le dispositif selon l'invention présente de façon conventionnelle une chaudière 9 apte à alimenter la chambre d'infusion 1 en eau chaude pour l'extraction de la matière contenue dans la dosette et particulièrement du café moulu.

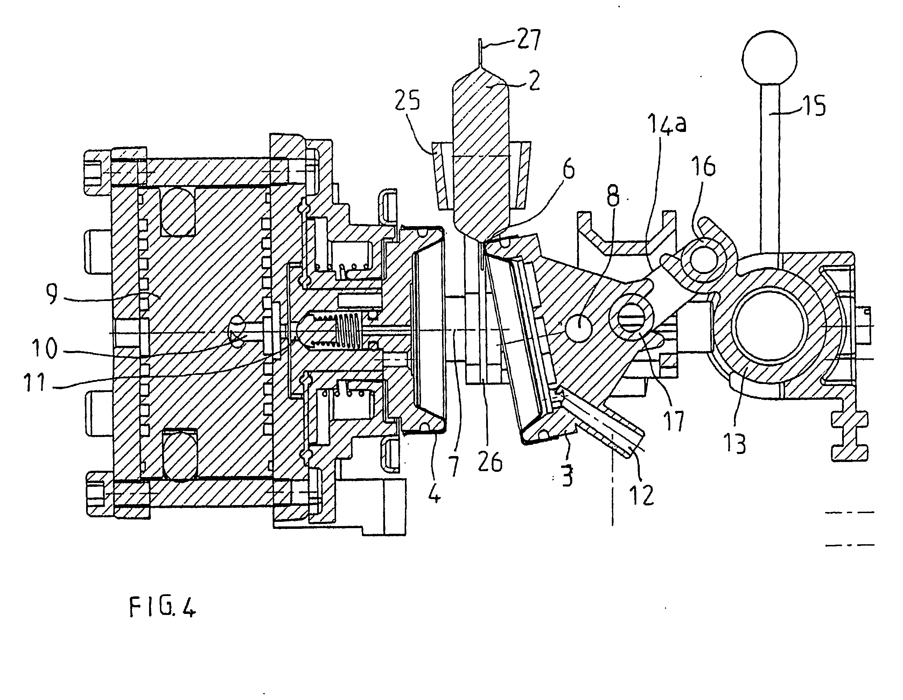

Tel que présenté en figure 4, un circuit d'eau 10 est présent au travers du dispositif avec une partie 11 d'admission de l'eau chaude dans la chambre d'infusion 1 et une partie de sortie 12 débouchant sur une goulotte déversant la boisson dans un entonnoir jusqu'au récipient de l'utilisateur.

Les dosettes utilisées pour le fonctionnement de la présente invention pourront être de type connues sur le marché actuellement.

De préférence mais de façon non limitative, on pourra utiliser les dosettes 2 comprenant une périphérie sensiblement plate et rigide assurant un maintien en forme de la dosette.

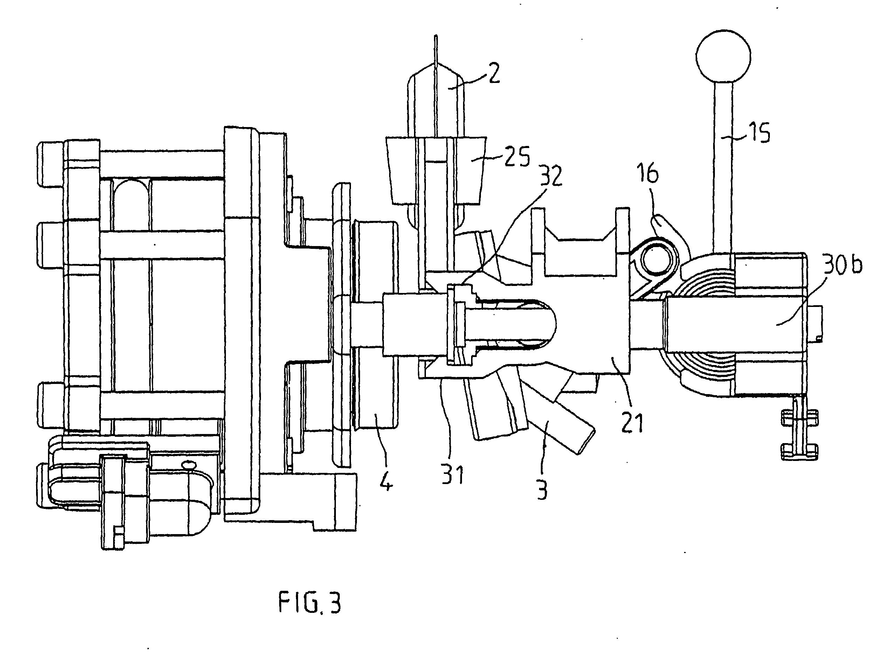

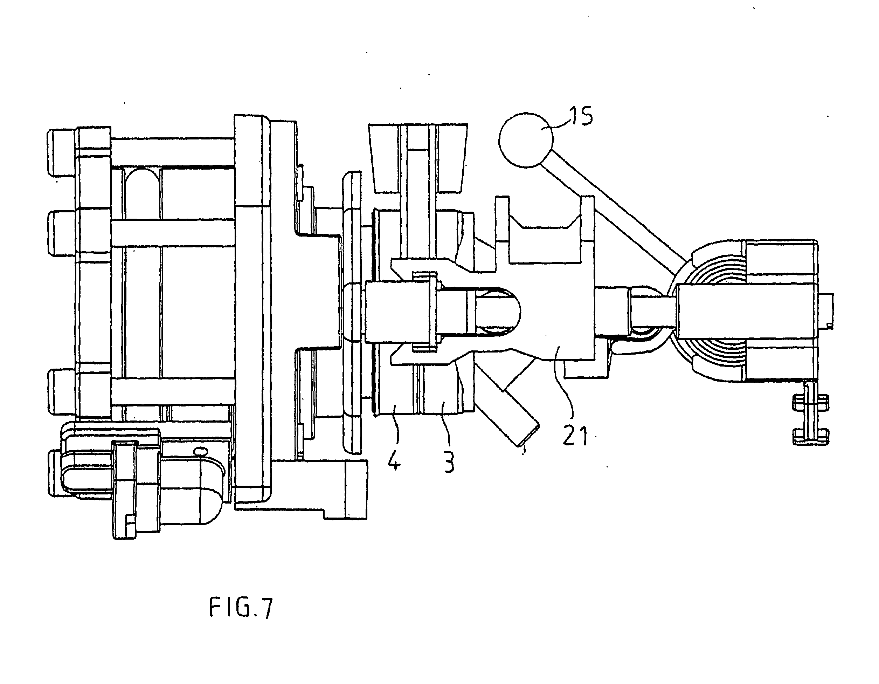

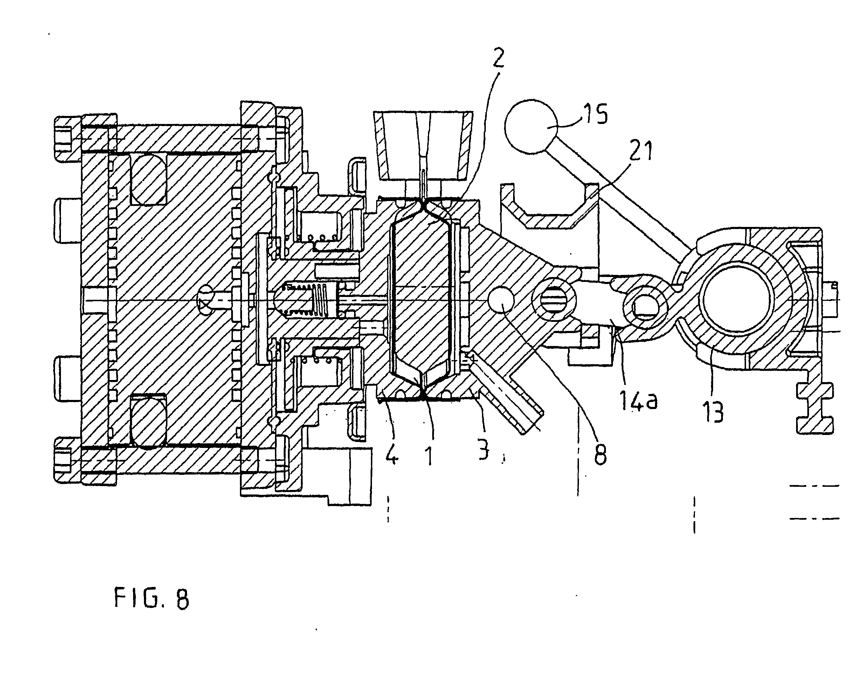

La chambre d'infusion 1 est constituée de deux parties 3, 4 aptes à être rapprochées pour fermer la chambre 1 tel que cela apparaît en figures 7 et 8 ou à être éloignées pour l'ouvrir comme cela ressort des figures 3 à 6.

De façon préférentielle, et pour la suite de la description, c'est la partie 3 qui se déplace en translation pour se rapprocher ou s'éloigner de l'autre partie 4.

Par ailleurs, la partie 3 est animée d'un mouvement de rotation de course limitée pour passer entre divers positions lors du fonctionnement.

A titre préféré, on utilise un même moyen d'entraînement pour assurer la translation et la rotation de la partie mobile 3.

On a repéré à titre d'exemple, en figure 4, la position de l'axe 8 de rotation de la partie mobile 3 et l'axe 7 de sa translation.

Pour la suite de la description et en référence aux dessins, on se place dans un exemple de machine à extraction horizontale (dans laquelle la dosette est positionnée sensiblement verticalement et reçoit l'eau chaude suivant un circuit sensiblement horizontal).

Cependant, d'autres orientations sont possibles sans sortir du cadre de l'invention.

Le moyen unique d'entraînement est constitué par un arbre d'entraînement 13 d'axe de rotation horizontal et apte à engendrer les mouvements de la partie mobile 3.

Pour ce faire, l'arbre 13 coopère avec au moins une biellette 14a, 14b mais préférentiellement deux biellettes.

Tel que cela est visible par exemple en figure 4, la biellette 14a, 14b est montée en liaison pivot 16, 17 d'une part sur l'arbre 13 et d'autre part, sur l'extrémité arrière de la partie mobile 3.

Un organe translatif 21 est également prévu pour suivre solidairement le mouvement de translation de la partie mobile 3 et assurer l'articulation en pivot selon l'axe 8 de ladite partie mobile 3.

La translation de l'organe 21 est en outre guidée par des moyens de guidage qui pourront être constitués par deux guides latéraux 30a, 30b comme cela ressort de la figure 2.

Suivant une première possibilité, l'arbre 13 est entraîné en rotation par une motorisation.

Suivant une seconde possibilité, envisagée dans les figures, l'entraînement en rotation s'effectue par le biais d'une levier 15 pouvant être actionné par l'utilisateur.

Dans ce cadre, la partie mobile 3 est inclinée vers le bas pour réaliser une surface de butée 6 en sa portion supérieure pour coopérer avec la surface extérieure inférieure de la dosette 2.

La surface 6 constitue ainsi une butée en phase d'alimentation de la dosette 2.

Pour optimiser l'étanchéisation de la chambre d'infusion 1 en position fermée, il peut être avantageux d'ajouter à la pression de fermeture opérée par l'utilisateur au moyen du levier 15, une pression additionnelle.

Dans ce cadre, un moyen de serrage en fermeture des deux parties 3, 4 de la chambre d'infusion 1 peut être constitué en complément.

A titre d'exemple préféré, on utilisera des moyens de serrage sous forme de vérin hydraulique à membrane dont la membrane mobile est apte à engendrer un léger déplacement de la partie 4 de la chambre d'infusion.

Tout autre moyen de serrage est également envisageable.

De façon avantageuse, le dispositif comprend également des moyens de guidage de la dosette 2 lors de son déplacement durant les phases de fonctionnement.

Dans ce cadre, on pourra constituer des moyens de guidage sous forme d'une glissière 25 constituée par deux rainures 26 aptes à encadrer la périphérie de la dosette 2.

La périphérie de ladite dosette 2 peut s'insérer dans chacune des rainures 26 ainsi constituées.

Des moyens de guidage sont avantageusement montés translatifs pour suivre le mouvement de rapprochement ou d'éloignement des deux parties.

En ce sens, ces moyens ont un déplacement couplé à celui de l'organe translatif 21 par l'intermédiaire de poussoirs 31 représentés notamment en figure 3.

Le poussoir 31 comprend une partie en créneau 32 apte à constituer deux portions d'appui du poussoir 31 sur une surface correspondante des moyens de guidage.

De cette façon, le mouvement des moyens de guidage suit celui de l'organe translatif 21 au cours des phases de fonctionnement.

Par ailleurs, le vide constitué entre les deux surfaces d'appui formées par le créneau 32 assure un retard dans le déplacement des moyens de guidage apte à assurer d'abord une avance de la partie mobile 3 seule puis une avance couplée du moyen de guidage et de la partie mobile 3 vers la partie fixe 4.

Le système à poussoir ainsi constitué peut être réalisé de façon guidée autour de deux guides latéraux 30a, 30b assurant le guidage en translation des éléments mobiles et la cohésion des pièces constitutives du dispositif.

Les phases de fonctionnement du présent dispositif sont plus particulièrement illustrées aux figures 3 à 8.

Les figures 3 et 4 montrent une première position de fonctionnement du dispositif dans laquelle la dosette 2 est en position de butée sur la paroi supérieure de la partie mobile 3.

Le levier 15 est lui dans une position angulaire prédéterminée ici verticale.

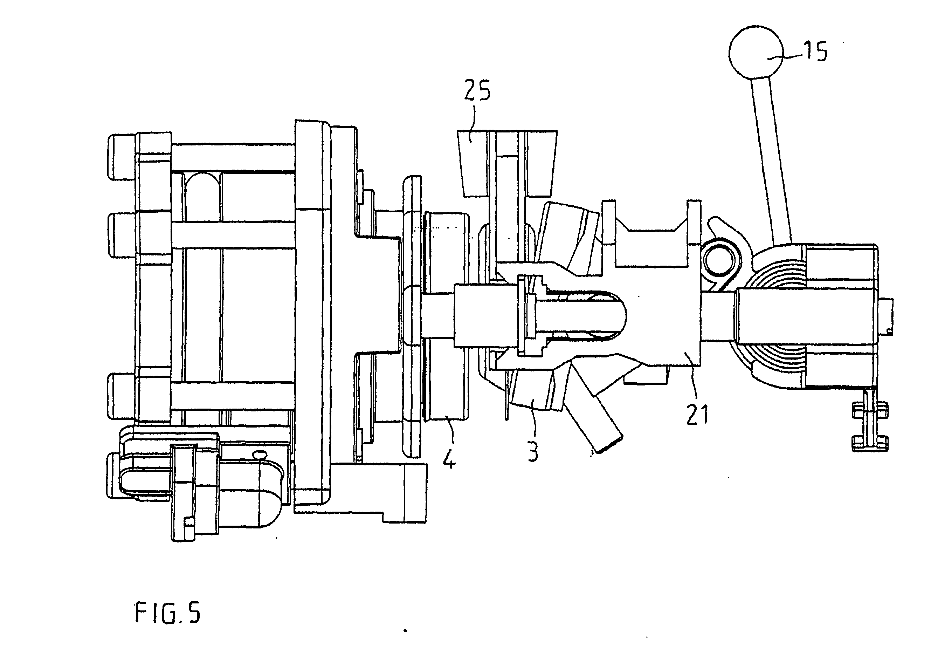

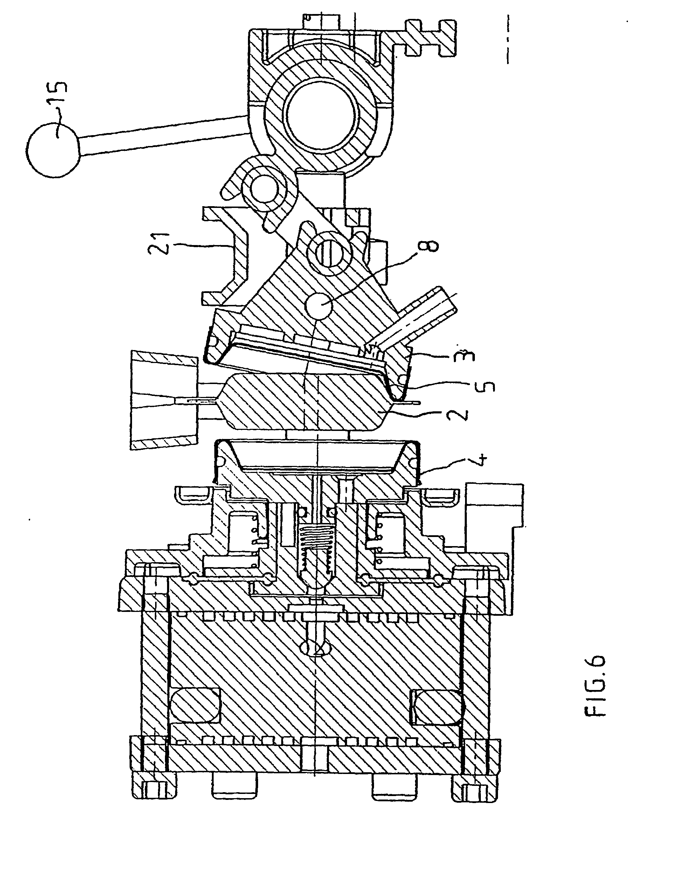

Un actionnement du levier 15 dans le sens trigonométrique permet de parvenir à la position illustrée aux figures 5 et 6 dans lesquelles la dosette 2 est reçue dans la partie mobile 3.

Entre ces deux phases de mouvement, l'arbre d'entraînement 13 a provoqué un appui de la biellette 14a sur la partie arrière de la partie mobile 3 et a particulièrement provoqué une rotation de la partie mobile dans le sens horaire.

En poursuivant la rotation du levier 15, l'arbre 13 engendre une poussée supplémentaire sur la partie mobile 3 par l'intermédiaire des biellettes 14a, 14b, cette poussée supplémentaire tendant à la translation de la partie mobile 3 et à sa fermeture pour constituer la chambre d'extraction 1.

On peut prévoir des surfaces de butée notamment sur l'organe translatif 21 pour limiter la mobilité angulaire de la partie mobile 3.

Ainsi, dans la position représentée aux figures 7 et 8, la partie mobile 3 clôt la chambre d'extraction 1.

Dès que la chambre d'infusion est fermée, l'eau chaude est injectée dans la chambre d'infusion.

La boisson est récupérée dans la goulotte.

Dès que la lixiviation est opérée, un mouvement inverse de l'arbre 13 induit un recul de la partie mobile 3 et son pivot dans le sens trigonométrique.

La partie mobile s'esquivant, la dosette 2 peut être libérée et chuter par gravité vers une zone de récupération.

La position ainsi pivotée de la partie mobile 3 vers le bas assure la formation à nouveau de la surface 6 de butée d'alimentation en partie supérieure de la partie mobile 3.

Les figures 3, 5 et 7 illustrent en vue de côté la réalisation du mouvement de translation des moyens de guidage lorsque ceux-ci sont présents.

A ce sujet, on visualise le poussoir 31 apte à provoquer l'avancée des moyens de guidage 25 au fur et à mesure de l'avancée de la partie mobile 3.

Le créneau 32 présent sur le poussoir 31 assure cependant un retard dans la translation des moyens de guidage 25.

La fin de l'évacuation de la dosette 2 s'opère dès que la partie mobile 3 est reculée et alors que les moyens de guidage 25 sont encore en position.

Une fois que la dosette est évacuée, les moyens de guidage 25 subissent à leur tour une translation.

Le retard opéré dans la translation des moyens de guidage 25 assure le bon décollement de la dosette 2 avant le retour en position initiale complet du dispositif.

### REFERENCES

1. Chambre d'infusion
2. Dosette
3. Partie mobile
4. Partie fixe
5. Butée de réception
6. Butée d'alimentation
7. Axe de translation
8. Axe de rotation
9. Chaudière
10. Circuit d'eau
11. Admission
12. Sortie
13.Arbre d'entraînement
14a, 14b. Biellette
15. Levier
16. Liaison pivot sur l'arbre
17. Liaison pivot sur partie mobile
18. Pièce de couplage
21. Organe translatif
25. Glissière
26. Rainure
27. Périphérie dosette
30a, 30b. Guides latéraux
31. Poussoir
32. Créneau

## Revendications

1. Dispositif de production de boisson par infusion d'un produit contenu dans une dosette (2), comportant une chambre d'infusion (1) apte à recevoir une dosette (2) et comprenant deux parties (3,4) configurées pour être rapprochées ou éloignées pour fermer ou ouvrir la chambre d'infusion (1),
l'une (3) des parties ayant une mobilité en rotation apte à mettre en butée la dosette (2) dans ladite partie,
la partie mobile (3) en rotation ayant une mobilité en translation pour ouvrir ou fermer la chambre d'infusion (1), le dispositif comportant
un moyen d'entraînement commun pour la mobilité en rotation et la mobilité en translation de la partie mobile (3), **caractérisé par le fait que** ledit moyen d'entraînement comporte un arbre d'entraînement (13) rotatif couplé à la partie mobile (3) par au moins une biellette (14a, 14b) montée pivotante entre ledit arbre d'entraînement (13) et ladite partie mobile (3).

2. Dispositif selon la revendication 1, **caractérisé par le fait**
**qu'**il comporte un organe translatif (21) solidaire de la partie mobile (3) dans son mouvement de translation et par rapport auquel elle est mobile en rotation.

3. Dispositif selon la revendication 2 **caractérisé par le fait**
**qu'**il présente des moyens (30a, 30b) de guidage en translation de l'organe translatif (21 ).

4. Dispositif selon l'une quelconque des revendications 1 à 3, **caractérisé par le fait**
**que** l'arbre (13) est actionné en rotation par un levier (15).

5. Dispositif selon l'une quelconque des revendications 1 à 4 **caractérisé par le fait**
**qu'**il comporte des moyens de serrage en fermeture des deux parties de la chambre d'infusion (1).

6. Dispositif selon l'une quelconque des revendications 1 à 5, **caractérisé par le fait**
**qu'**il comporte des moyens de guidage de la dosette (2).

7. Dispositif selon la revendication 6, **caractérisé par le fait**
**que** les moyens de guidage comprennent une glissière (25) avec au moins une rainure (26) apte à recevoir la périphérie (27) d'une dosette.

8. Dispositif selon les revendications 6 ou 7, **caractérisé par le fait**
**que** les moyens de guidage sont montés translatifs pour suivre le mouvement de rapprochement ou d'éloignement des parties.

9. Dispositif selon l'une quelconque des revendications 1 à 8 **caractérisé par le fait**
**qu'**il comporte une chaudière (9) située du côté de la partie fixe (4) en rotation.

## Claims

1. Device for producing a beverage by infusing a product contained in a dose (2), comprising an infusion chamber (1) able to receive a dose (2) and two parts (3, 4) arranged so as to move closer or apart in order to close or open infusion chamber (1), one of the parts (3) having rotational mobility so as to bring dose (2) to a stop in the aforementioned part, part (3) moving in rotation with translatory mobility in order to open or close infusion chamber (1), the device comprising common drive means for rotational mobility and translatory mobility of moving part (3), **characterized in that**
the aforementioned drive means comprise a rotating drive shaft (13) coupled to moving part (3) by at least one rod (14a, 14b) fitted to swivel between aforementioned drive shaft (13) and aforementioned moving part (3).

2. Device according to claim 1, **characterized in that**
it comprises a translatory body (21) attached to the moving part (3) during its translatory movement and relative to which it is rotationally mobile.

3. Device according to claim 2 **characterized in that**
it presents means (30a, 30b) for guiding in translation the translatory body (21).

4. Device according to any of claims 1 to 3, **characterized in that**
shaft (13) is actuated in rotation by a lever (15).

5. Device according to any of claims 1 to 4 **characterized in that**
it comprises means for closing tight the two parts of infusion chamber (1).

6. Device according to any of claims 1 to 5 **characterized in that**
it comprises means for guiding dose (2).

7. Device according to claim 6 **characterized in that**
the guiding means include a slide (25) with at least one groove (26) able to receive periphery (27) of a dose.

8. Device according to the claims 6 or 7, **characterized in that**,
the guiding means are assembled in a translatory manner so as to match the moving closer or apart of the parts.

9. Device according to any of claims 1 to 8 **characterized in that**
it comprises a boiler (9) located on the side of fixed part (4) in rotation.

## Patentansprüche

1. Vorrichtung zum Herstellen von Brühgetränken aus einem, in einer Dosette (2) enthaltenen Produkt, mit Hilfe einer, zur Aufnahme einer Dosette (2) geeigneten Brühkammer (1), die aus zwei Teilen (3, 4) besteht, die so gestaltet sind, dass sie zusammen- oder auseinander fahren können, um die Brühkammer (1) zu schließen oder zu öffnen, dass eines (3) der beiden Teilen drehbar gelagert ist, um die Dosette (2) in dem besagten Teil in Anschlag zu bringen, dass der drehbar gelagerte Teil translatorisch beweglich ist, um die Brühkammer (1) zu öffnen oder zu schließen und dass die Vorrichtung ein gemeinsames Antriebsmittel für die Drehbewegung und die translatorische Bewegung des beweglichen Teils (3) besitzt, **gekennzeichnet dadurch, dass** dieses Antriebsmittel eine Antriebwelle (13) besitzt, die mit dem beweglichen Teil (3) durch mindestens eine Steuerstange (14a, 14b) verbunden ist, die zwischen der Antriebswelle (13) und dem genannten beweglichen Teil (3) drehbar angeordnet ist.

2. Vorrichtung gemäß Anspruch 1, **gekennzeichnet dadurch, dass** sie Translationsorgan (21) besitzt, das mit dem beweglichen Teil (3) bei dessen Translationsbewegung fest verbunden ist, in bezug auf welches es jedoch drehbar angeordnet ist.

3. Vorrichtung gemäß Anspruch 2, **gekennzeichnet dadurch, dass** es Führungen (30a, 30b) für die translatorischen Bewegungen des Translationsorgans (21) besitzt.

4. Vorrichtung gemäß einem der vorstehenden Patentansprüche 1 bis 3, **gekennzeichnet dadurch, dass** die Welle (13) durch einen Hebel (15) in Drehbewegung versetzt wird.

5. Vorrichtung gemäß einem der vorstehenden Ansprüche 1 bis 4, **gekennzeichnet dadurch, dass** es Mittel zum Klemmen der beiden Teile der Brühkammer (1) beim Schließen besitzt.

6. Vorrichtung gemäß einem der vorstehenden Ansprüche 1 bis 5, **gekennzeichnet dadurch, dass** es Mittel zum Führen der Dosette (2) besitzt.

7. Vorrichtung gemäß Anspruch 6, **gekennzeichnet dadurch, dass** die Führungsmittel eine Führung (25) mit mindestens einer Nut (26) besitzen, die zur Aufnahme des äußeren Randes (27) einer Dosette geeignet sind.

8. Vorrichtung gemäß einem der Ansprüche 6 oder 7, **gekennzeichnet dadurch, dass** die Führungsmittel translatorisch beweglich angeordnet sind, um dem Zusammenfahren oder dem Auseinanderfahren der beiden Teile zu folgen.

9. Vorrichtung gemäß einem der Ansprüche 1 bis 8, **gekennzeichnet dadurch, dass** sie einen Wasserkessel (9) auf seiten des nicht drehbar gelagerten Teils (4) besitzt.
